# EUROPEAN PATENT SPECIFICATION

(11) **EP 4 177 509 B1**
(45) Date of publication and mention of the grant of the patent: **22.05.2024**
(21) Application number: 22205490.0
(22) Date of filing: 04.11.2022
(51) Int. Cl.: F16P 3/08

(54) **AUTOMATIC MACHINE FOR MANUFACTURING OR PACKING CONSUMER PRODUCTS, IN PARTICULAR OF THE TOBACCO INDUSTRY, AND RELATED CONTROL METHOD**
AUTOMATISCHE MASCHINE ZUR HERSTELLUNG ODER VERPACKUNG VON VERBRAUCHERPRODUKTEN, INSBESONDERE DER TABAKINDUSTRIE, UND ZUGEHÖRIGES STEUERUNGSVERFAHREN
MACHINE AUTOMATIQUE DE FABRICATION OU D'EMBALLAGE DE PRODUITS DE CONSOMMATION, EN PARTICULIER DE L'INDUSTRIE DU TABAC, ET PROCÉDÉ DE COMMANDE ASSOCIÉ

(30) Priority: 05.11.2021 IT 202100028166
(43) Date of publication of application: 10.05.2023
(73) Proprietor: G.D SOCIETA' PER AZIONI, 40133 Bologna (IT)
(72) Inventor: MARRONE, Quintino, 40133 BOLOGNA (IT); SQUARZONI, Michele, 40133 BOLOGNA (IT); FANTI, Andrea, 40133 BOLOGNA (IT); GAMBERINI, Giuliano, 40133 BOLOGNA (IT)
(74) Representative: Studio Torta S.p.A.

(56) References cited:
- EP-A1- 2 871 402
- EP-A1- 3 474 305
- EP-B1- 2 352 948
- DE-A1-102012 111 342
- DE-A1-102016 221 359

## Description

### CROSS-REFERENCE TO RELATED APPLICATIONS

This Patent Application claims priority from Italian Patent Application No. 102021000028166 filed on November 5, 2021.

### TECHNICAL FIELD

The present invention relates to an automatic machine for manufacturing or packing consumer products, in particular of the tobacco industry, and to a related control method.

The present invention finds advantageous application in the tobacco industry, to which the following disclosure will refer without losing generality.

### PRIOR ART

An automatic machine for manufacturing or packing products of the tobacco industry comprises at least one processing line which is formed by a plurality of operating members and feeds and combines with one another at least two different materials with which the consumer products (for example, cigarettes, packets, cartons, etc.) are made. An automatic machine also comprises a protection barrier that surrounds the processing line and has the function of preventing an operator from approaching the processing line while the processing line is in operation. The protection barrier comprises a plurality of doors that can assume a closed position or an open position: while the processing line is in operation, the doors must be strictly closed to ensure the integrity of the protection barrier and therefore the doors can be opened (for example to perform cleaning, maintenance, replacement interventions) only when the processing line is stopped.

The safety regulations prescribe that each door must be coupled to a corresponding safety sensor which is designed to detect whether the door is in the closed position; a control unit of the automatic machine is configured to allow the operation of the processing line only when each safety sensor detects that the corresponding door is in the closed position. When a door is opened while the processing line is in operation the control unit, which is notified of the opening by the corresponding safety sensor, immediately stops the processing line in the shortest possible time. This manoeuvre (namely, opening a door while the processing line is in operation) should never be done as the correct procedure involves firstly stopping the processing line and, only after the processing line has been stopped, opening a door; however, the safety regulations rightly impose to also provide for the case in which an operator opens a door when the processing line is in operation (namely, at the wrong time).

The processing line can normally reach a particularly high operating speed (for example, of the order of 400-800 products per minute) and therefore due to the inevitable mechanical inertia, the stopping of the processing line can take several seconds; consequently, it would be possible for an operator who opens a door while the processing line is in operation (namely, at the wrong time) to touch part of the processing line while the processing line is still in motion (even if in a rapid-stop step). For this reason, the regulations enforce, when the automatic machine is fast and therefore requires a certain time to stop, using a safety sensor provided with a mechanical interlock which, when it is activated, physically prevents the door from opening by holding the door in the closed position; in this way, the risk of an operator opening a door while the processing line is in operation (namely, at the wrong time) is avoided.

Activation and deactivation of the mechanical interlock are relatively long and laborious (also because the mechanical interlock is designed to be safe, not to be fast) and therefore when the automatic machine is in the assembly or maintenance step the continuous need to perform manual interventions on the processing line interspersed with short actuations of the processing line (or of part of the processing line) to test each time the results of the manual interventions significantly increases the time required to perform the assembly or maintenance interventions.

The patent EP2352948B1 represents the closest state of the art and describes a safety switch for generating a system enable signal based on the position of a movable guard door that is used to safeguard a hazardous area of a machine installation; namely, at least part of the machine system can only be actuated when the system enable signal is present. Other well known automatic machines are known from EP 2 871 402 A1, DE 10 2016 221359 A1 or EP 2 352 948 B1.

### DESCRIPTION OF THE INVENTION

The purpose of the present invention is to provide an automatic machine for manufacturing or packing consumer products, in particular of the tobacco industry, and a related control method, which allow to reduce the time required to perform assembly or maintenance and are, at the same time, easy and inexpensive to implement.

According to the present invention, an automatic machine for manufacturing or packing consumer products, in particular of the tobacco industry, and a related control method are provided, according to what is claimed in the attached claims.

The claims describe preferred embodiments of the present invention forming an integral part of the present description.

### BRIEF DESCRIPTION OF THE DRAWINGS

The present invention will now be described with reference to the attached drawings, which illustrate a non-limiting embodiment thereof, wherein:
- Figure 1 is a schematic and front view of a packing machine which manufactures rigid packets of cigarettes and is made according to the present invention;
- Figure 2 is a schematic view of a protection barrier of the packing machine of Figure 1;
- Figure 3 is a schematic view of a first door of the packing machine of Figure 1;
- Figure 4 is a schematic view of a second door of the packing machine of Figure 1, which is mounted alternatively to the first door of Figure 3;
- Figure 5 is a schematic and front view of a double machine for manufacturing filters made according to the present invention; and
- Figure 6 is a perspective view of a packaging machine which manufactures single-dose cartridges for electronic cigarettes and is made according to the present invention.

### PREFERRED EMBODIMENTS OF THE INVENTION

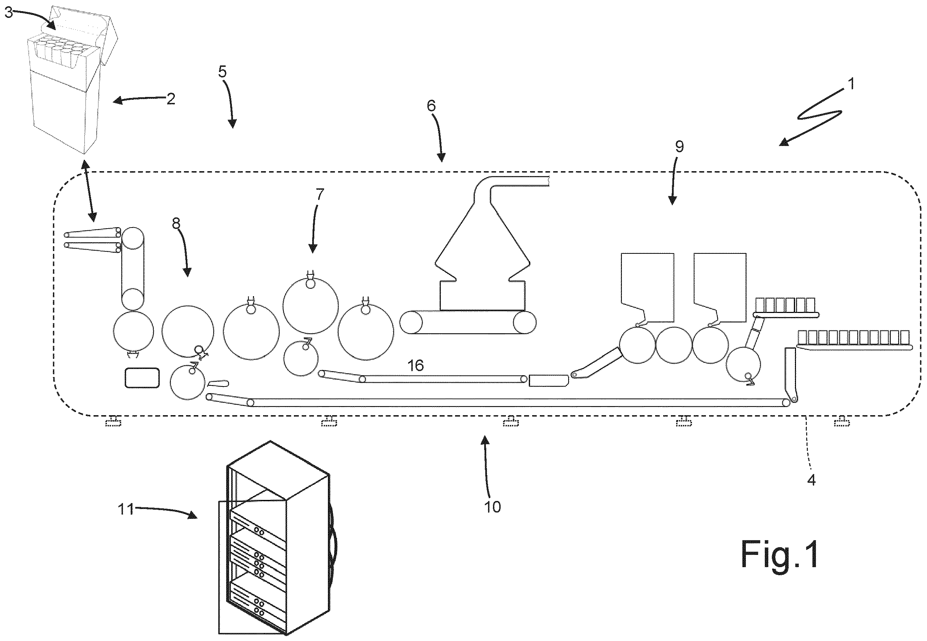

In Figure 1, number 1 denotes, as a whole, an automatic packing machine for manufacturing a rigid packet 2 of cigarettes, which comprises an outer container that is made of cardboard or rigid paperboard, is cup-shaped, houses an inner wrap containing a group 3 of cigarettes, and is provided with a hinged lid.

The automatic packing machine 1 comprises a frame 4 which rests on the floor and supports a processing line 5 along which the processing (namely, the packing) of the cigarettes is performed. The following are arranged along the processing line 5: a forming unit 6 in which the groups 3 of cigarettes are formed in succession, a wrapping unit 7 in which a wrapping sheet (typically made of metallized paper) is folded around each group 3 of cigarettes) to form the corresponding inner wrap, and a wrapping unit 8 in which a blank (typically made of cardboard and already provided with pre-weakened folding lines) is folded around each inner wrap to form the corresponding outer container provided with the hinged lid. A feeding unit 9 is coupled to the wrapping unit 7 which feeds the wrapping sheets in succession to form the inner wraps, while a feeding unit 10 is coupled to the wrapping unit 8 which feeds the blanks in succession to form the outer containers 2.

The automatic packing machine 1 comprises a plurality of operating members (for example linear conveyors, rotating conveyors, gluing units, fixed folders, mobile folders, control members, support heads, pulleys, belts, pushers, pockets for groups 3 of cigarettes, electronic boards, electric motors, electric actuators, pneumatic valves ...), which are distributed along the processing line 5 to form the processing line 5 (namely to form the various units 6-10 of which the processing line 5 is composed). In other words, the processing line 5 is provided with a plurality of operating members and feeds and combines with one another the materials (cigarettes, wrapping sheets, blanks of paper or paperboard, glues) used by the automatic packing machine 1 with which the consumer products are manufactured, namely, to form the packets 2 of cigarettes.

Furthermore, the automatic packing machine 1 comprises a control unit 11, which supervises the operation of the automatic packing machine 1 and therefore of the processing line 5.

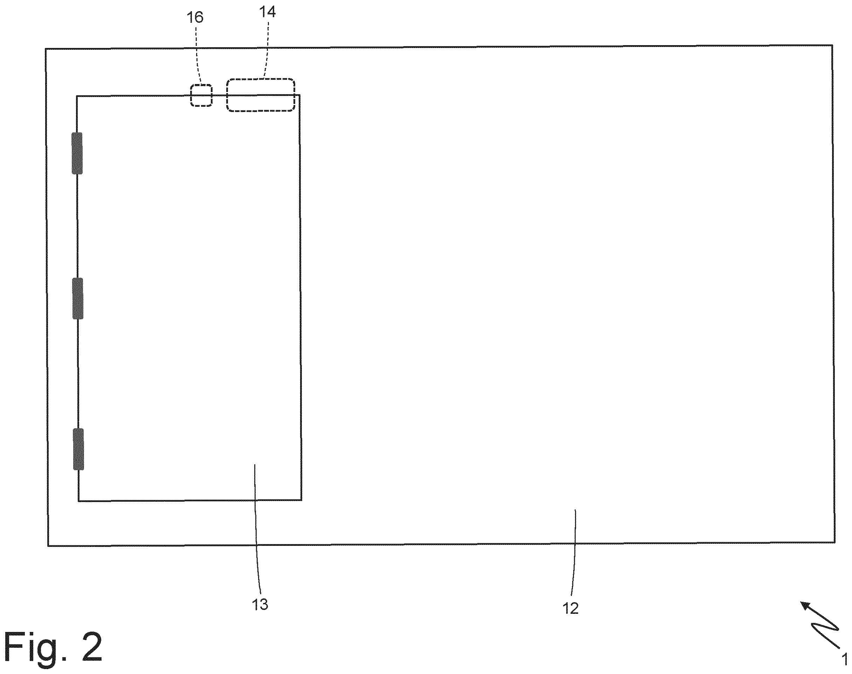

According to what is illustrated in Figure 2, the automatic packing machine 1 comprises a protection barrier 12 which surrounds the processing line 5 and comprises at least one door 13 which can assume a closed position or an open position (in fact the protection barrier 12 generally comprises a plurality of doors 13 to ensure wide accessibility to the production line 5 when the production line 5 is stopped).

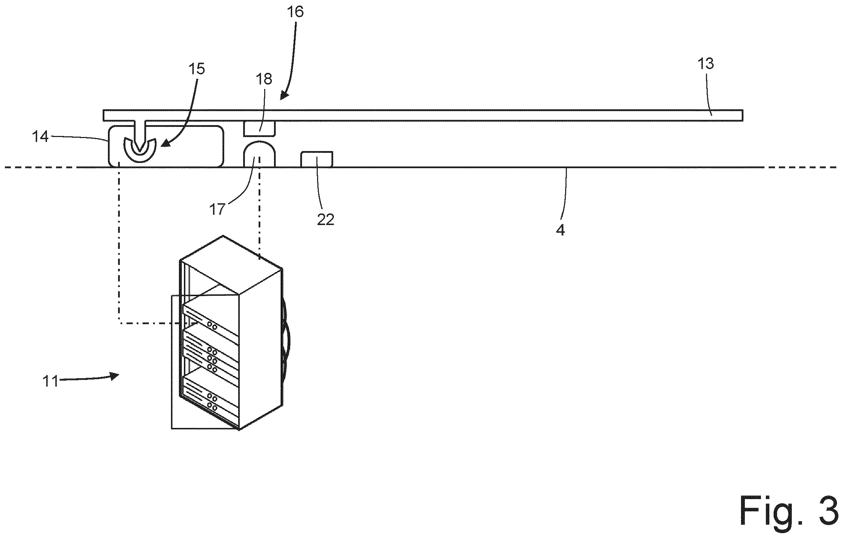

The automatic packing machine 1 comprises a safety sensor 14 which is designed to detect whether the door 13 is in the closed position and is provided with a mechanical interlock 15 (schematically illustrated in Figure 3) which, when it is activated, physically prevents the door 13 from opening by holding the door 13 in the closed position.

The automatic packing machine 1 comprises another safety sensor 16 which is different and separate from the safety sensor 14, is designed to detect whether the door 13 is in the closed position and is not provided with a mechanical interlock.

The control unit 11 is configured to allow the processing line 5 to operate (typically for the normal production of consumer products) until reaching a nominal operating speed (namely, a maximum operating speed) only when the safety sensor 14 detects that the door 13 is in the closed position and the mechanical interlock 15 is active. In other words, it is possible to operate the processing line 5 (typically for the normal production of consumer products) even at high operating speeds (therefore until reaching a nominal operating speed) only when the safety sensor 14 signals that the door 13 is in the closed position and, at the same time, the mechanical interlock 15 is active.

Furthermore, the control unit 11 is configured to allow the processing line 5 to operate in a test mode and at a limited operating speed and (substantially) lower than the nominal operating speed when the safety sensor 16 detects that the door 13 is in the closed position regardless of what is detected by the safety sensor 14. In other words, it is possible to operate the processing line 5 in a test mode (namely, without actually producing any product unless for testing purposes) and at a limited operating speed (that is, substantially lower than the nominal operating speed) when the safety sensor 16 detects that the door 13 is in the closed position and without taking into account what is detected by the safety sensor 14 (namely, without the mechanical interlock 15 necessarily being active).

By way of example, the nominal operating speed (namely, the maximum operating speed) of the automatic packing machine 1 can be of the order of 400-800 products per minute, while the limited operating speed is lower than 20%, and preferably 10%. (or even 5%), of the nominal operating speed (namely, the limited operating speed is lower than 40-80 products per minute).

In this way, in the normal operation of the automatic packing machine 1 (namely, when the automatic packing machine 1 is used for the normal production of consumer products) it is always necessary that the door 13 is in the closed position and, at the same time, the mechanical interlock 15 is active. Whereas, during an assembly or maintenance step it is possible to operate the processing line 5 in a test mode and at a limited operating speed and (significantly) lower than the nominal operating speed even without activating the mechanical interlock 15 (namely, only by placing the door 13 in the closed position); in this way, the assembly or maintenance step is faster as it is possible to perform manual interventions on the processing line 5 interspersed with short actuations of the processing line 5 (or part of the processing line 5) to test each time the result of the manual interventions without having to activate and deactivate the mechanical interlock 15 every time.

For example, during the assembly or maintenance step it is possible to quickly perform a reference search operation (also known as a "*homing*" operation) of the electric motors; during a reference search operation the control circuit moves the axis so as to read a reference signal which identifies the position to be considered as the "zero" of the axis and on this point the counters are reset, and, from that moment, the position of the rotor will be known for the constant updating of the movement relative to this "*zero*"*.* For example, in the case of absence of an electrical signal, this reference is lost and the system must rotate until it finds its end-stroke in order to establish the exact point where it was set.

It is important to underline that, without activating the mechanical interlock 15, it is possible to operate the processing line 5 in a test mode and at a limited operating speed and (substantially) lower than the nominal operating speed; therefore in the event of sudden and unexpected opening of the door 13 with the processing line 5 in operation, the control unit 11 can, therefore, promptly stop (namely, in a fraction of a second) the processing line 5 (due to the fact that the processing line 5 operates at a limited operating speed and the mechanical inertias are very low). Consequently, the safety of the operators is always guaranteed because from the opening of the door 13 to the complete stop of the processing line 5, very little time passes (a fraction of a second) that, in any case, an operator who opens the door 13 (at the wrong time) does not have the physical time to touch moving parts.

According to a possible embodiment, the safety sensor 16 has a higher coding level than a coding level of the safety sensor 14; that is, the safety sensor 16 has a high coding level (that is, it has the possibility of having more than 1000 different encodings) while the safety sensor 14 has a low coding level (that is, it has the possibility of having from 1 to 9 different encodings). In this embodiment, the control unit 11 is configured to allow the processing line 5 to operate (for the production of the consumer products) until reaching a nominal operating speed only when the safety sensor 14 detects that the door 13 is in the closed position and the mechanical interlock 15 is active and, simultaneously, the safety sensor 16 detects that the door 13 is in the closed position; namely, the safety sensor 16 is used in combination with the safety sensor 14 to simultaneously have both the guarantee (provided only by the safety sensor 14) of the activation of the mechanical interlock 15, and the guarantee (provided only by the safety sensor 16) of a high level of coding. In this way, the safety sensor 14 can be less expensive as it has a low level of coding.

Each safety sensor 14 or 16 always has two parts that must be coupled: one part integral with the frame 4 and the other part integral with the door 13; the coding level of the safety sensor 14 or 16 denotes the number of possible combinations between the two parts of the safety sensor 14 or 16 and therefore the higher the coding level the more difficult it is to find a part that combines with the other part of the safety sensor 14 or 16.

The safety sensor 14, being provided with the mechanical interlock 15, must necessarily provide for physical contact between the part integral with the frame 4 and the other part integral with the door 13.

According to a preferred embodiment illustrated in Figure 3, the safety sensor 16 is a contactless sensor and comprises a reader device 17, which is mounted on the frame 4 (or alternatively on the door 13) and a signalling body 18, which is mounted on the door 13 (or alternatively on the frame 4) so as to face the reader device 17 only when the door 13 is in the closed position. The reader device 17 is active (and therefore is powered by electrical energy) and is connected to the control unit 11, while the signalling body 18 is passive (namely, it is completely devoid of electric power).

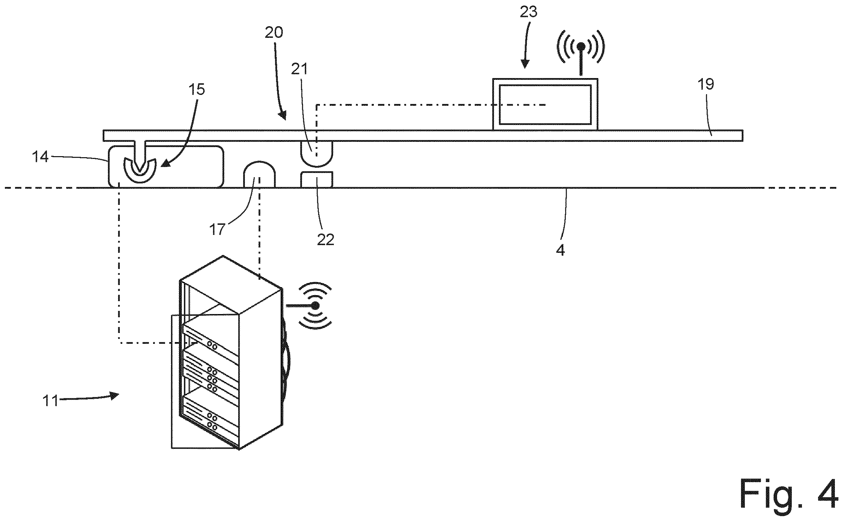

According to a possible embodiment illustrated in Figures 3 and 4, in addition to the door 13, the automatic packing machine 1 comprises a further door 19 which is different from the door 13 (namely, it has a different shape and/or dimensions than the door 13) and it can be installed alternatively to the door 13 in a different configuration of the automatic packing machine 1. Namely, in a different configuration of the automatic packing machine 1 where it is necessary to install other additional components, the door 13 must be disassembled and replaced by the door 19.

The door 19 is designed to cooperate with the safety sensor 14 (which has, as previously stated, a low coding) but not with the safety sensor 16 (which has, as previously stated, a high coding); consequently, a further safety sensor 20 is provided which is different and separate from the safety sensor 14 and from the safety sensor 16, is designed to detect whether the door 19 is in the closed position, is not provided with a mechanical interlock and is read by the control unit 11 alternatively to the safety sensor 16 only when the door 19 is installed instead of the door 13. Namely, the control unit 11 uses the safety sensor 20 alternatively to the safety sensor 16 when the door 19 is installed instead of the door 13. Preferably, the safety sensor 20 (although being different and separate from the safety sensor 16) is structurally completely similar to the safety sensor 16.

According to a preferred embodiment, the safety sensor 16 is a contactless sensor and comprises a reader device 17, which is mounted on the frame 4 (or alternatively on the door 13) and a signalling body 18, which is mounted on the door 13 (or alternatively on the frame 4) so as to face the reader device 17 only when the door 13 is in the closed position; similarly, the safety sensor 16 is a contactless sensor and comprises a reader device 21, which is mounted on the frame 4 (or alternatively on the door 19) and a signalling body 22, which is mounted on the door 19 (or alternatively on the frame 4) to be facing the reader device 21 only when the door 19 is in the closed position.

According to a preferred embodiment, the signalling body 22 of the safety sensor 20 is completely identical to the signalling body 18 of the safety sensor 16 and, hence, has the exact same coding as the signalling body 18; namely, the two signalling bodies 18 and 22 of the safety sensors 16 and 20 are perfectly identical and therefore interchangeable with one another.

According to a preferred embodiment illustrated in Figures 3 and 4, a reader device 17 and one single signalling body 22 are mounted on the frame 4; consequently, the door 13 supports the signalling body 18 while the door 19 supports the reader device 21. In this embodiment, an additional control unit 23 is also mounted on the door 19 which communicates with the reader device 21 and communicates with the main control unit 11 (for example, in wireless mode).

In particular, in the embodiment illustrated in Figures 3 and 4, the reader device 17 is mounted on the frame 4, the signalling body 18 is mounted on the door 13, the reader device 21 is mounted on the door 19, and the signalling body 22 is mounted on the frame 4. Instead, according to an alternative embodiment not illustrated, the reader device 17 is mounted on the door 13, the signalling body 18 is mounted on the frame 4, the reader device 21 is mounted on the frame 4, and the signalling body 22 is mounted on the door 19.

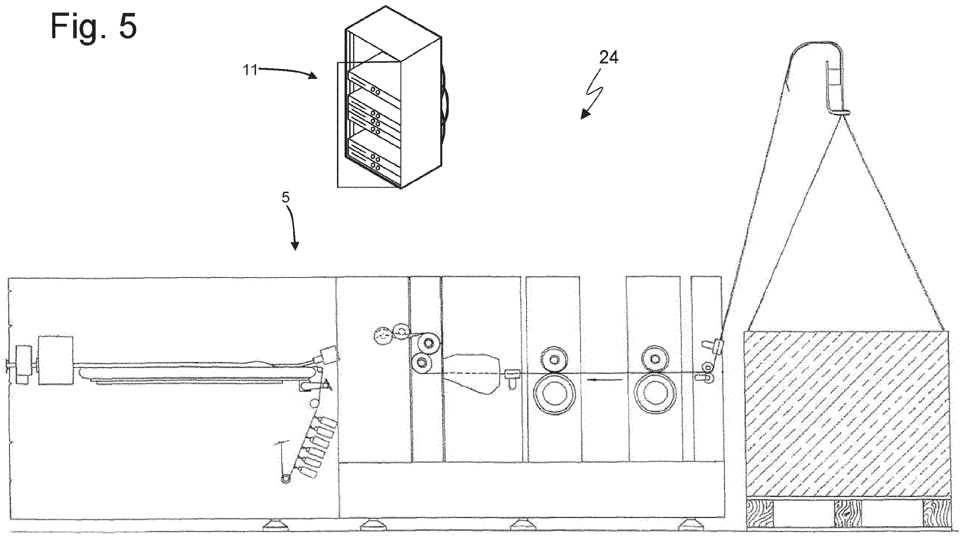

In Figure 5, number 24 denotes, as a whole, an automatic double packaging machine for manufacturing cigarette filters provided with a double processing line 5 along which the processing (production) of the filters is performed. In other words, the processing line 5 is formed by a plurality of operating members and feeds and combines with one another the materials (filtering material, paper strips, glue, etc.) forming the filters made by the automatic packaging machine 24. The automatic packaging machine 24 could be provided with the protection barrier 12 described above alternatively to the automatic packaging machine 1.

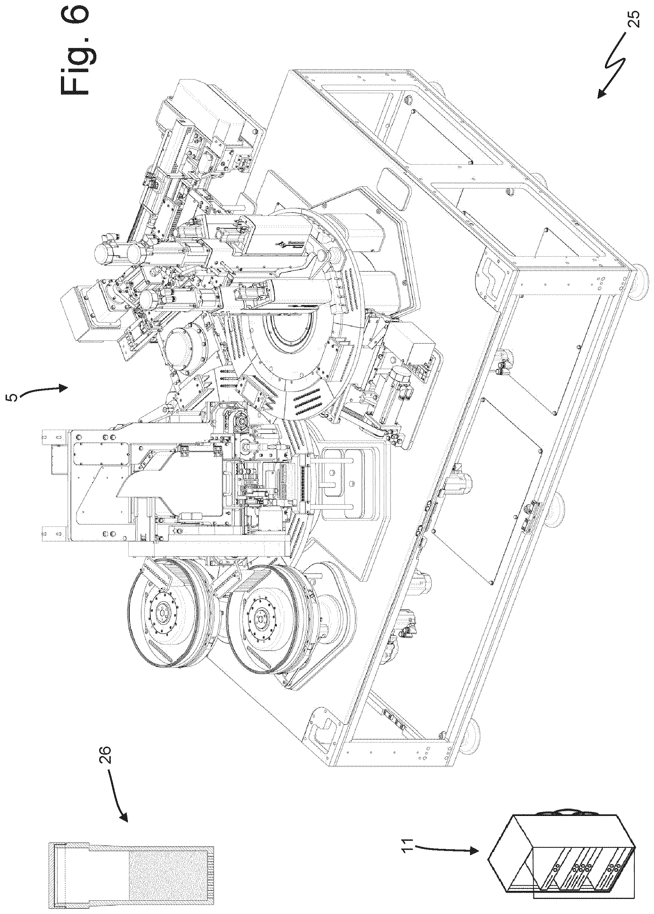

In Figure 6 number 25 denotes, as a whole, an automatic packaging machine for manufacturing disposable cartridges 26 for electronic cigarettes provided with a multiple processing line 5 along which the processing (production) of the disposable cartridges 26 is performed. In other words, the processing line 5 is formed by a plurality of operating members and feeds and combines with one another the materials (casings, tobacco, filtering material, locking rings ...) forming the disposable cartridges 26 made by the automatic packaging machine 25. The automatic packaging machine 25 could be provided with the protection barrier 12 described above alternatively to the automatic packaging machine 1.

The embodiments described herein can be combined with one another without departing from the scope of the present invention.

The automatic machine 1 described above has numerous advantages.

In the first place, the automatic machine 1 described above allows an assembly or maintenance step to be performed more rapidly in which manual interventions are required on the processing line 5 interspersed with short actuations of the processing line 5 (or part of the processing line 5) to test each time the result of the manual interventions.

Furthermore, the automatic machine 1 described above is simple and inexpensive to produce, as compared to a similar known automatic machine, it requires only a few hardware modifications that require the addition of commercial components of relatively modest cost.

### LIST OF THE REFERENCE NUMBERS OF THE FIGURES

- 1: automatic machine
- 2: packet of cigarettes
- 3: group of cigarettes
- 4: frame
- 5: processing line
- 6: forming unit
- 7: wrapping unit
- 8: wrapping unit
- 9: feeding unit
- 10: feeding unit
- 11: control unit
- 12: protection barrier
- 13: door
- 14: safety sensor
- 15: mechanical interlock
- 16: safety sensor
- 17: reader device
- 18: signalling body
- 19: door
- 20: safety sensor
- 21: reader device
- 22: signalling body
- 23: control unit
- 24: automatic machine
- 25: automatic machine
- 26: disposable cartridges

## Claims

1. An automatic machine (1, 24, 25) for manufacturing or packing consumer products, in particular of the tobacco industry; the automatic machine (1, 24, 25) comprises:
at least one processing line (5), which is provided with a plurality of operating members and feeds at least one material with which the consumer products are manufactured;
a protection barrier (12), which surrounds the processing line (5) and comprises at least one first door (13), which can assume a closed position or an open position;
a first safety sensor (14), which is designed to detect whether the first door (13) is in the closed position and is provided with a mechanical interlock (15), which, when it is activated, physically prevents the first door (13) from opening by holding the first door (13) in the closed position;
a control unit (11), which is configured to allow the processing line (5) to operate until reaching a nominal operating speed, only when the first safety sensor (14) detects that the first door (13) is in the closed position and the mechanical interlock (15) is active; and
a second safety sensor (16), which is different and separate from the first safety sensor (14), is designed to detect whether the first door (13) is in the closed position and is not provided with a mechanical interlock;
the automatic machine (1, 24, 25) is **characterized in that** the control unit (11) is configured to allow the processing line (5) to operate in a test mode and only at a limited operating speed, which is lower than the nominal operating speed, when the second safety sensor (16) detects that the first door (13) is in the closed position, regardless of what is detected by the first safety sensor (14).

2. The automatic machine (1, 24, 25) according to claim 1, wherein the control unit (11) is configured to allow the processing line (5) to operate until reaching the nominal operating speed, only when the first safety sensor (14) detects that the first door (13) is in the closed position and the mechanical interlock (15) is active and, simultaneously, the second safety sensor (16) detects that the first door (13) is in the closed position.

3. The automatic machine (1, 24, 25) according to claim 2, wherein the second safety sensor (16) has a higher coding level than a coding level of the first safety sensor (14).

4. The automatic machine (1, 24, 25) according to claim 1, 2 or 3, wherein the second safety sensor (16) is a contactless sensor and comprises a reader device (17), which is mounted on a frame (4) or on the first door (13), and a signalling body (18), which is mounted on the first door (13) or on the frame (4) so as to face the reader device (17) only when the first door (13) is in the closed position.

5. The automatic machine (1, 24, 25) according to one of the claims from 1 to 4 and comprising:
a second door (19), which can be installed alternatively to the first door (13) in a different configuration of the automatic machine (1, 24, 25) and is designed to cooperate with the first safety sensor (14), but not with the second safety sensor (16); and
a third safety sensor (20), which is different and separate from the first safety sensor (14), is designed to detect whether the second door (19) is in the closed position, is not provided with a mechanical interlock and is read by the control unit (11) alternatively to the second safety sensor (16) only when the second door (19) is installed instead of the first door (13).

6. The automatic machine (1, 24, 25) according to claim 5, wherein:
the second safety sensor (16) is a contactless sensor and comprises a first reader device (17), which is mounted on a frame (4) or on the first door (13), and a first signalling body (18), which is mounted on the first door (13) or on the frame (4) so as to face the first reader device (17) only when the first door (13) is in the closed position; and
the second safety sensor (16) is a contactless sensor and comprises a second reader device (21), which is mounted on the frame (4) or on the second door (19), and a second signalling body (22), which is mounted on the second door (19) or on the frame (4) so as to face the second reader device (21) only when the second door (19) is in the closed position.

7. The automatic machine (1, 24, 25) according to claim 6, wherein the second signalling body (22) is completely identical to the first signalling body (18) and, hence, has the exact same coding as the first signalling body (18).

8. The automatic machine (1, 24, 25) according to claim 6 or 7, wherein one single reader device (17) and one single signalling body (22) are mounted on the frame (4).

9. The automatic machine (1, 24, 25) according to claim 8, wherein:
the first reader device (17) is mounted on the frame (4);
the first signalling body (18) is mounted on the first door (13);
the second reader device (21) is mounted on the second door (19) ;
the second signalling body (22) is mounted on the frame (4).

10. The automatic machine (1, 24, 25) according to claim 8, wherein:
the first reader device (17) is mounted on the first door (13);
the first signalling body (18) is mounted on the frame (4);
the second reader device (21) is mounted on the frame (4);
the second signalling body (22) is mounted on the second door (19).

11. The automatic machine (1, 24, 25) according to one of the claims from 1 to 10, wherein the limited operating speed is lower than 20%, and preferably 10% of the nominal operating speed.

12. A method to control an automatic machine (1, 24, 25) for manufacturing or packing consumer products, in particular of the tobacco industry; the automatic machine (1, 24, 25) comprises: at least one processing line (5), which is provided with a plurality of operating members and feeds at least one material with which the consumer products are manufactured; and a protection barrier (12), which surrounds the processing line (5) and comprises at least one door (13), which can assume a closed position or an open position; the control method comprises the steps of:
detecting whether the door (13) is in the closed position by means of a first safety sensor (14), which is provided with a mechanical interlock (15), which, when it is activated, physically prevents the first door (13) from opening by holding the door (13) in the closed position;
allowing the processing line (5) to operate until reaching a nominal operating speed, only when the first safety sensor (14) detects that the door (13) is in the closed position and the mechanical interlock (15) is active; and
detecting whether the door (13) is in the closed position by means of a second safety sensor (16), which is different and separate from the first safety sensor (14) and is not provided with a mechanical interlock;
the automatic machine (1, 24, 25) is **characterized in that** it comprises the further step of allowing the processing line (5) to operate in a test mode and only at a limited operating speed, which is lower than the nominal operating speed, when the second safety sensor (16) detects that the door (13) is in the closed position, regardless of what is detected by the first safety sensor (14).

## Patentansprüche

1. Automatische Maschine (1, 24, 25) zur Fertigung oder Verpackung von Verbrauchsprodukten, insbesondere der Tabakindustrie; wobei die automatische Maschine (1, 24, 25) umfasst:
wenigstens eine Verarbeitungslinie (5), die mit mehreren Bedienungselementen versehen ist und wenigstens ein Material, mit dem die Verbrauchsprodukte gefertigt werden, zuführt;
eine Schutzbarriere (12), die die Verarbeitungslinie (5) umgibt und wenigstens eine erste Tür (13) umfasst, die eine geschlossene Position oder eine offene Position einnehmen kann;
einen ersten Sicherheitssensor (14), der ausgelegt ist, zu detektieren, ob die erste Tür (13) in der geschlossenen Position ist, und der mit einem mechanischen Schloss (15) versehen ist, das dann, wenn es aktiviert wird, physisch verhindert, dass die erste Tür (13) geöffnet wird, indem die erste Tür (13) in der geschlossenen Position gehalten wird;
eine Steuereinheit (11), die konfiguriert ist, den Betrieb der Verarbeitungslinie (5) bis zum Erreichen einer Nenn-Betriebsgeschwindigkeit nur dann zuzulassen, wenn der erste Sicherheitssensor (14) detektiert, dass die erste Tür (13) in der geschlossenen Position ist und das mechanische Schloss (15) aktiv ist; und
einen zweiten Sicherheitssensor (16), der vom ersten Sicherheitssensor (14) verschieden ist und von diesem getrennt ist, der ausgelegt ist, zu detektieren, ob die erste Tür (13) in der geschlossenen Position ist, und der nicht mit einem mechanischen Schloss versehen ist;
wobei die automatische Maschine (1, 24, 25) **dadurch gekennzeichnet ist, dass** die Steuereinheit (11) konfiguriert ist, unabhängig davon, was durch den ersten Sicherheitssensor (14) detektiert wird, den Betrieb der Verarbeitungslinie (5) in einer Testbetriebsart und nur mit einer begrenzten Betriebsgeschwindigkeit, die niedriger als die Nenn-Betriebsgeschwindigkeit ist, dann zuzulassen, wenn der zweite Sicherheitssensor (16) detektiert, dass die erste Tür (13) in der geschlossenen Position ist.

2. Automatische Maschine (1, 24, 25) nach Anspruch 1, wobei die Steuereinheit (11) konfiguriert ist, den Betrieb der Verarbeitungslinie (5) bis zum Erreichen der Nenn-Betriebsgeschwindigkeit nur dann zuzulassen, wenn der erste Sicherheitssensor (14) detektiert, dass die erste Tür (13) in der geschlossenen Position ist und das mechanische Schloss (15) aktiv ist, und gleichzeitig der zweite Sicherheitssensor (16) detektiert, dass die erste Tür (13) in der geschlossenen Position ist.

3. Automatische Maschine (1, 24, 25) nach Anspruch 2, wobei der zweite Sicherheitssensor (16) eine höhere Codierungsebene als eine Codierungsebene des ersten Sicherheitssensors (14) hat.

4. Automatische Maschine (1, 24, 25) nach Anspruch 1, 2 oder 3, wobei der zweite Sicherheitssensor (16) ein berührungsloser Sensor ist und eine Auslesevorrichtung (17), die an einem Rahmen (4) oder an der ersten Tür (13) montiert ist, und einen Signalgebungskörper (18), der so an der ersten Tür (13) oder am Rahmen (4) montiert ist, dass er nur dann der Auslesevorrichtung (17) zugewandt ist, wenn die erste Tür (13) in der geschlossenen Position ist, umfasst.

5. Automatische Maschine (1, 24, 25) nach einem der Ansprüche 1 bis 4, und umfassend:
eine zweite Tür (19), die alternativ zur ersten Tür (13) in einer unterschiedlichen Konfiguration der automatischen Maschine (1, 24, 25) eingebaut werden kann, und die so ausgelegt ist, dass sie mit dem ersten Sicherheitssensor (14), jedoch nicht mit dem zweiten Sicherheitssensor (16) zusammenwirkt; und
einen dritten Sicherheitssensor (20), der von dem ersten Sicherheitssensor (14) verschieden ist und von diesem getrennt ist, der ausgelegt ist, nur dann, wenn die zweite Tür (19) anstelle der ersten Tür (13) eingebaut ist, zu detektieren, ob die zweite Tür (19) in der geschlossenen Position ist, der nicht mit einem mechanischen Schloss versehen ist und durch die Steuereinheit (11) alternativ zum zweiten Sicherheitssensor (16) ausgelesen wird.

6. Automatische Maschine (1, 24, 25) nach Anspruch 5, wobei:
der zweite Sicherheitssensor (16) ein berührungsloser Sensor ist und eine erste Auslesevorrichtung (17), die an einem Rahmen (4) oder an der ersten Tür (13) montiert ist, und einen ersten Signalgebungskörper (18), der so an der ersten Tür (13) oder am Rahmen (4) montiert ist, dass er nur dann der ersten Auslesevorrichtung (17) zugewandt ist, wenn die erste Tür (13) in der geschlossenen Position ist, umfasst; und
der zweite Sicherheitssensor (16) ein berührungsloser Sensor ist und eine zweite Auslesevorrichtung (21), die am Rahmen (4) oder an der zweiten Tür (19) montiert ist, und einen zweiten Signalgebungskörper (22), der so an der zweiten Tür (19) oder am Rahmen (4) montiert ist, dass er nur dann der zweiten Auslesevorrichtung (21) zugewandt ist, wenn die zweite Tür (19) in der geschlossenen Position ist, umfasst.

7. Automatische Maschine (1, 24, 25) nach Anspruch 6, wobei der zweite Signalgebungskörper (22) mit dem ersten Signalgebungskörper (18) vollständig übereinstimmt und folglich die exakt gleiche Codierung wie der erste Signalgebungskörper (18) hat.

8. Automatische Maschine (1, 24, 25) nach Anspruch 6 oder 7, wobei eine einzige Auslesevorrichtung (17) und ein einziger Signalgebungskörper (22) am Rahmen (4) montiert sind.

9. Automatische Maschine (1, 24, 25) nach Anspruch 8, wobei:
die erste Auslesevorrichtung (17) am Rahmen (4) montiert ist;
der erste Signalgebungskörper (18) an der ersten Tür (13) montiert ist;
die zweite Auslesevorrichtung (21) an der zweiten Tür (19) montiert ist;
der zweite Signalgebungskörper (22) am Rahmen (4) montiert ist.

10. Automatische Maschine (1, 24, 25) nach Anspruch 8, wobei:
die erste Auslesevorrichtung (17) an der ersten Tür (13) montiert ist;
der erste Signalgebungskörper (18) am Rahmen (4) montiert ist;
die zweite Auslesevorrichtung (21) am Rahmen (4) montiert ist;
der zweite Signalgebungskörper (22) an der zweiten Tür (19) montiert ist.

11. Automatische Maschine (1, 24, 25) nach einem der Ansprüche 1 bis 10, wobei die begrenzte Betriebsgeschwindigkeit weniger als 20 % und vorzugsweise 10 % der Nenn-Betriebsgeschwindigkeit beträgt.

12. Verfahren zum Steuern einer automatischen Maschine (1, 24, 25) für die Fertigung oder Verpackung von Verbrauchsprodukten, insbesondere der Tabakindustrie; wobei die automatische Maschine (1, 24, 25) umfasst:
wenigstens eine Verarbeitungslinie (5), die mit mehreren Bedienungselementen versehen ist und wenigstens ein Material, mit dem die Verbrauchsprodukte gefertigt werden, zuführt; und eine Schutzbarriere (12), die die Verarbeitungslinie (5) umgibt und wenigstens eine Tür (13) umfasst, die eine geschlossene Position oder eine offene Position einnehmen kann; wobei das Steuerverfahren die Schritte umfasst:
Detektieren, ob die Tür (13) in der geschlossenen Position ist, mittels eines ersten Sicherheitssensors (14), der mit einem mechanischen Schloss (15) versehen ist, das dann, wenn es aktiviert ist, physisch verhindert, dass die erste Tür (13) geöffnet wird, indem die Tür (13) in der geschlossenen Position gehalten wird;
Zulassen des Betriebs der Verarbeitungslinie (5) bis zum Erreichen einer Nenn-Betriebsgeschwindigkeit nur dann, wenn der erste Sicherheitssensor (14) detektiert, dass die Tür (13) in der geschlossenen Position ist und das mechanische Schloss (15) aktiv ist; und
Detektieren, ob die Tür (13) in der geschlossenen Position ist, mittels eines zweiten Sicherheitssensors (16), der von dem ersten Sicherheitssensor (14) verschieden ist und von diesem getrennt ist und nicht mit einem mechanischen Schloss versehen ist;
wobei die automatische Maschine (1, 24, 25) **dadurch gekennzeichnet ist, dass** sie den weiteren Schritt umfasst, den Betrieb der Verarbeitungslinie (5) in einer Testbetriebsart und nur mit einer begrenzten Betriebsgeschwindigkeit, die niedriger als die Nenn-Betriebsgeschwindigkeit ist, dann zuzulassen, wenn der zweite Sicherheitssensor (16), unabhängig davon, was durch den ersten Sicherheitssensor (14) detektiert wird, detektiert, dass die Tür (13) in der geschlossenen Position ist.

## Revendications

1. Machine automatique (1, 24, 25) pour la fabrication ou l'emballage de produits de consommation, en particulier de l'industrie du tabac ; la machine automatique (1, 24, 25) comprenant :
au moins une ligne de traitement (5) qui est prévue avec une pluralité d'éléments opérationnels et alimente au moins un matériau avec lequel les produits de consommation sont fabriqués ;
une barrière de protection (12) qui entoure la ligne de traitement (5) et comprend au moins une première porte (13) qui peut adopter une position fermée ou une position ouverte ;
un premier capteur de sécurité (14) qui est conçu pour détecter si la première porte (13) est dans la position fermée et est prévu avec un verrouillage mécanique (15) qui, lorsqu'il est activé, empêche physiquement l'ouverture de la première porte (13) en maintenant la première porte (13) dans la position fermée ;
une unité de commande (11) qui est configurée pour permettre à la ligne de traitement (5) de fonctionner jusqu'à atteindre une vitesse de fonctionnement nominale, uniquement lorsque le premier capteur de sécurité (14) détecte que la première porte (13) est dans la position fermée et que le verrouillage mécanique (15) est actif ; et
un deuxième capteur de sécurité (16), qui est différent et séparé du premier capteur de sécurité (14), est conçu pour détecter si la première porte (13) est dans la position fermée et n'est pas prévu avec un verrouillage mécanique ;
la machine automatique (1, 24, 25) est **caractérisée en ce que** l'unité de commande (11) est configurée pour permettre le fonctionnement de la ligne de traitement (5) dans un mode de test et uniquement à une vitesse de fonctionnement limitée, qui est inférieure à la vitesse de fonctionnement nominale, lorsque le deuxième capteur de sécurité (16) détecte que la première porte (13) est dans la position fermée, indépendamment de ce qui a été détecté par le premier capteur de sécurité (14).

2. Machine automatique (1, 24, 25) selon la revendication 1, dans laquelle l'unité de commande (11) est configurée pour permettre le fonctionnement de la ligne de traitement (5) jusqu'à atteindre la vitesse de fonctionnement nominale, uniquement lorsque le premier capteur de sécurité (14) détecte que la première porte (13) est dans la position fermée et que le verrouillage mécanique (15) est actif, et simultanément, le deuxième capteur de sécurité (16) détecte que la première porte (13) est dans la position fermée.

3. Machine automatique (1, 24, 25) selon la revendication 2, dans laquelle le deuxième capteur de sécurité (16) a un niveau de codage supérieur à un niveau de codage du premier capteur de sécurité (14).

4. Machine automatique (1, 24, 25) selon la revendication 1, 2 ou 3, dans laquelle le deuxième capteur de sécurité (16) est un capteur sans contact et comprend un dispositif de lecture (17) qui est monté sur un bâti (4) ou sur la première porte (13) et un corps de signalisation (18) qui est monté sur la première porte (13) ou sur le bâti (4) afin de faire face au dispositif de lecture (17) uniquement lorsque la première porte (13) est dans la position fermée.

5. Machine automatique (1, 24, 25) selon l'une des revendications 1 à 4 et comprenant :
une seconde porte (19) qui peut être installée en variante sur la première porte (13) dans une configuration différente de la machine automatique (1, 24, 25) et est conçue pour coopérer avec le premier capteur de sécurité (14), mais pas avec le deuxième capteur de sécurité (16) ; et
un troisième capteur de sécurité (20), qui est différent et séparé du premier capteur de sécurité (14), est conçu pour détecter si la seconde porte (19) est dans la position fermée, est dépourvue de verrouillage automatique et est lue par l'unité de commande (11) en alternative au deuxième capteur de sécurité (16) uniquement lorsque la seconde porte (19) est installée à la place de la première porte (13).

6. Machine automatique (1, 24, 25) selon la revendication 5, dans laquelle :
le deuxième capteur de sécurité (16) est un capteur sans contact et comprend un premier dispositif de lecture (17), qui est monté sur un bâti (4) ou sur la première porte (13), et un premier corps de signalisation (18), qui est monté sur la première porte (13) ou sur le bâti (4) afin de faire face au premier dispositif de lecture (17) uniquement lorsque la première porte (13) est dans la position fermée ; et
le deuxième capteur de sécurité (16) est un capteur sans contact et comprend un second dispositif de lecture (21), qui est monté sur le bâti (4) ou sur la seconde porte (19) et un second corps de signalisation (22), qui est monté sur la seconde porte (19) ou sur le bâti (4) afin de faire face au second dispositif de lecture (21) uniquement lorsque la seconde porte (19) est dans la position fermée.

7. Machine automatique (1, 24, 25) selon la revendication 6, dans laquelle le second corps de signalisation (22) est complètement identique au premier corps de signalisation (18) et par conséquent, a exactement le même codage que le premier corps de signalisation (18).

8. Machine automatique (1, 24, 25) selon la revendication 6 ou 7, dans laquelle un seul dispositif de lecture (17) et un seul dispositif de signalisation (22) sont montés sur le bâti (4).

9. Machine automatique (1, 24, 25) selon la revendication 8, dans laquelle :
le premier dispositif de lecture (17) est monté sur le bâti (4) ;
le premier corps de signalisation (18) est monté sur la première porte (13) ;
le second dispositif de lecture (21) est monté sur la seconde porte (19) ;
le second corps de signalisation (22) est monté sur le bâti (4).

10. Machine automatique (1, 24, 25) selon la revendication 8, dans laquelle :
le premier dispositif de lecture (17) est monté sur la première porte (13) ;
le premier corps de signalisation (18) est monté sur le bâti (4) ;
le second dispositif de lecture (21) est monté sur le bâti (4) ;
le second corps de signalisation (22) est monté sur la seconde porte (19).

11. Machine automatique (1, 24, 25) selon l'une des revendications 1 à 10, dans laquelle la vitesse opérationnelle limitée est inférieure à 20% et de préférence à 10% de la vitesse opérationnelle nominale.

12. Procédé pour commander une machine automatique (1, 24, 25) pour la fabrication ou l'emballage de produits de consommation, en particulier, de l'industrie du tabac ; la machine automatique (1, 24, 25) comprend : au moins une ligne de traitement (5), qui est prévue avec une pluralité d'éléments opérationnels et alimente au moins un matériau avec lequel les produits de consommation sont fabriqués ; et une barrière de protection (12), qui entoure la ligne de traitement (5) et comprend au moins une porte (13), qui peut adopter une position fermée ou une position ouverte ; le procédé de commande comprend les étapes suivantes :
détecter si la porte (13) est dans la position fermée au moyen d'un premier capteur de sécurité (14), qui est prévu avec un verrouillage mécanique (15) qui, lorsqu'il est activé, empêche physiquement l'ouverture de la première porte (13) en maintenant la porte (13) dans la position fermée ;
permettre le fonctionnement de la ligne de traitement (5) jusqu'à atteindre une vitesse opérationnelle nominale, uniquement lorsque le premier capteur de sécurité (14) détecte que la porte (13) est dans la position fermée et que le verrouillage mécanique (15) est actif ; et
détecter si la porte (13) est dans la position fermée au moyen d'un deuxième capteur de sécurité (16), qui est différent et séparé du premier capteur de sécurité (14) et n'est pas doté de verrouillage mécanique ;
la machine automatique (1, 24, 25) est **caractérisée en ce qu'**elle comprend l'étape supplémentaire pour permettre le fonctionnement de la ligne de traitement (5) dans un mode de test et uniquement à une vitesse opérationnelle limitée, qui est inférieure à la vitesse opérationnelle nominale, lorsque le deuxième capteur de sécurité (16) détecte que la porte (13) est dans la position fermée, indépendamment de ce qui est détecté par le premier capteur de sécurité (14).
